Europäisches Patentamt

European Patent Office

Office européen des brevets

(19)

(11) Veröffentlichungsnummer: **0 012 257**
**B1**

(12) # EUROPÄISCHE PATENTSCHRIFT

(45) Veröffentlichungstag der Patentschrift:
**28.07.82**

(51) Int. Cl.³: **B 27 G 19/02**

(21) Anmeldenummer: **79104662.6**

(22) Anmeldetag: **23.11.79**

(54) Schutzvorrichtung für das Kreissägeblatt von Kreissägemaschinen mit vertikal beweglichem Sägeaggregat.

(30) Priorität: **16.12.78 DE 7837368 U**

(43) Veröffentlichungstag der Anmeldung:
**25.06.80 Patentblatt 80/13**

(45) Bekanntmachung des Hinweises auf die Patenterteilung:
**28.07.82 Patentblatt 82/30**

(84) Benannte Vertragsstaaten:
**AT CH DE LU NL SE**

(56) Entgegenhaltungen:
**DE-U-1 979 333**
**FR-A-1 398 936**
**GB-A-1 124 586**
**US-A-2 926 709**

(73) Patentinhaber: **Chr. Eisele Maschinenfabrik GmbH & Co. KG., Nürtinger Strasse 9 - 15, D-7316 Köngen (DE)**

(72) Erfinder: **Drixler, Karl, In-den-Hofwiesen 37/1, D-7440 Nürtingen-Neckarhausen (DE)**

(74) Vertreter: **Patentanwaltskanzlei Höger, Stellrecht & Partner, Uhlandstrasse 14c, D-7000 Stuttgart 1 (DE)**

ACTORUM AG

## Schutzvorrichtung für das Kreissägeblatt von Kreissägemaschinen mit vertikal beweglichem Sägeaggregat

Die Erfindung betrifft eine Schutzvorrichtung für das Kreissägeblatt von Kreissägemaschinen mit vertikal beweglichem Sägeaggregat mit den Merkmalen des Oberbegriffes von Anspruch 1.

Schutzvorrichtungen dieser Art sind in verschiedenen Ausführungsformen bekannt. Diese Bauarten sind mit einer schmalen, am Sägeaggregat zu befestigenden Schutzhaube ausgestattet, welche das Kreissägeblatt von oben her übergreift und ungefähr bis zur Hälfte in sich aufnimmt.

Um die andere Hälfte des Kreissägeblattes an seiner dem Sägeaggregat gegenüberliegenden Stirnseite und an seinem an der Bedienungsseite vorhandenen Umfangsteil abzuschirmen, ist der Schutzhaube eine durch ein Plattenelemente gebildete seitliche Abdeckung zugeordnet, die das an der Bedienungsseite vorhandene Umfangsteil des Kreissägeblattes umgreift. Um dabei im Arbeitsbereich des letzteren gute Sichtmöglichkeiten zu schaffen, besteht die Abdeckung aus durchsichtigem Kunststoff.

Die Abdeckung ist des weiteren relativ zur Schutzhaube in der Höhe verstellbar und feststellbar vorgesehen, um sie beim Einrichten der Kreissägemaschine so einstellen zu können, dass sich deren untere Kante unmittelbar oberhalb des zu durchsägenden Werkstückes befindet.

Mit dieser Abdeckung gewährleistet somit diese bekannte Schutzvorrichtung sowohl an der frei zugänglichen Stirnseite des Kreissägeblattes als auch an der Bedienungsseite einen wirksamen Berührungsschutz.

Auf der Seite des Sägeaggregates hingegen ist das am letzteren nach unten vorstehende Teilstück des Kreissägeblattes frei zugänglich, weshalb diese Bauart den neuen Prüfgrundsätzen für Metallbe- und -verarbeitungsmaschinen nicht mehr gerecht wird, die unter anderem vorschreiben, dass in der Ruhestellung des Kreissägeblattes ein Hineingreifen in den schneidenden Teil nicht mehr möglich sein darf bzw. in der Arbeitsstellung nur der zum Schneiden benutzte Teil des Sägeblattes freigegeben wird.

Aus der GB-A 11 24 586 ist eine Schutzvorrichtung für das Kreissägeblatt einer Kreissägemaschine mit vertikal beweglichem Sägeaggregat bekannt. Die Schutzvorrichtung umfasst zwei Abdeckteile, von denen der erste starr mit dem Sägeaggregat verbunden und der zweite mittels einer Schlitzführung teleskopierend auf dem ersten Teil in vertikaler Richtung gleiten kann. Auch bei dieser Schutzvorrichtung muss im zweiten Abdeckteil eine schlitzförmige Aussparung vorgesehen sen, in welcher die Welle des Kreissägeblattes verschieblich ist. Diese Ausnehmung ist bei der vorbekannten Schutzvorrichtung ständig offen, so dass ein unerwünschtes Hineingreifen in den schneidenden Teil des Sägeaggregates möglich ist.

Die der Erfindung zugrundeliegende Aufgabe besteht deshalb darin, eine Schutzvorrichtung gemäss dem Oberbegriff von Anspruch 1 konstruktiv so zu verbessern, dass sie die Forderungen der neuen Prüfbestimmungen voll erfüllt.

Diese Aufgabe wird durch die kennzeichnenden Merkmale des Anspruches 1 gelöst.

Gemäss Anspruch 2 tritt die die Sägewelle aufnehmende Ausnehmung am unteren Rand der sie aufweisenden Gehäusewand aus dieser aus. Dadurch besteht bei entsprechender Auslegung des Gehäuses die Möglichkeit, auf der Kreissägemaschine Kreissägeblätter relativ grossen und relativ kleinen Durchmessers einsetzen zu können, wobei dann im Falle relativ kleinkalibriger Kreissägeblätter die Sägewelle nach unten aus dem Gehäuse austauchen kann.

Das die längliche Ausnehmung zur Aufnahme der Sägewelle in der Ausgangsstellung der letzteren abdeckende Abdeckglied kann beispielsweise verschiebbar vorgesehen sein, wobei dasselbe z.B. mittels einer Verstellvorrichtung synchron zur Vertikalbewegung der Sägewelle zum Freigeben bzw. Abdecken der länglichen Gehäuseausnehmung entsprechend verstellbar sein kann. Bei einer bevorzugten Ausführungsform der Erfindung ist jedoch das Abdeckglied gemäss den Ansprüchen 3-5 ausgebildet, so dass sich die erforderlichen Schwenkkbewegungen des Abdeckgliedes zum Abdecken und Freigeben der Sägewellenausnehmung ohne zusätzliche Verstellvorrichtung erzielen lassen. Vorteilhaft ist es hierbei, die Anordnung des Abdeckgliedes nach Anspruch 6 zu treffen.

In weiterer vorteilhafter Ausgestaltung der Erfindung ist das Gehäuse gemäss Anspruch 7 mit einer verschliessbaren Wandöffnung zum Auswechseln des Kreissägeblattes ausgestattet.

Damit die untere Begrenzungskante des Gehäuses stets in eine Lage unmittelbar oberhalb von zu durchtrennenden Werkstücken eingestellt und dadurch sichergestellt werden kann, dass das Kreissägeblatt auch an der Arbeitsstelle seitlich nicht zugänglich ist, ist das Gehäuse gemäss Anspruch 8 am Maschinengestell in der Höhe stufenlos verstellbar und feststellbar angordnet.

Schliesslich kann die Schutzvorrichtung gemäss Anspruch 9 noch mit einer Sprühvorrichtung ausgestattet sein, so dass das Kreissägeblatt in einer völlig umschlossenen Zone mit Kühl- und Schmierflüssigkeit benetzt werden kann, die lediglich nach unten aus dem Gehäuse austreten und somit nicht mehr verspritzt werden kann.

Weitere Merkmale und Einzelheiten der Erfindung sind in der sich anschliessenden Beschreibung eines in der Zeichnung gezeigten Ausführungsbeispieles einer erfindungsgemässen Schutzvorrichtung und/oder in den Schutzansprüchen erläutert. In der Zeichnung zeigen:

Fig. 1 eine Gesamtansicht einer Sägemaschine mit vertikal verstellbarem Sägeaggregat, in schaubildlicher Darstellung, an die eine erfindungsgemässe Schutzvorrichtung angebaut ist;

Fig. 2 eine Vorderansicht der Schutzvorrichtung;

Fig. 3 eine Draufsicht der Schutzvorrichtung, teilweise aufgebrochen;

Fig. 4 eine Darstellung der Schutzvorrichtung gemäss Fig. 2, wobei jedoch das Kreissägeblatt der Maschine in seiner untersten Endstellung angedeutet ist;

Fig. 5 eine Rückansicht der Schutzvorrichtung in einer Darstellung gemäss Fig. 2;

Fig. 6 eine Rückansicht der Schutzvorrichtung in einer Darstellung gemäss Fig. 4.

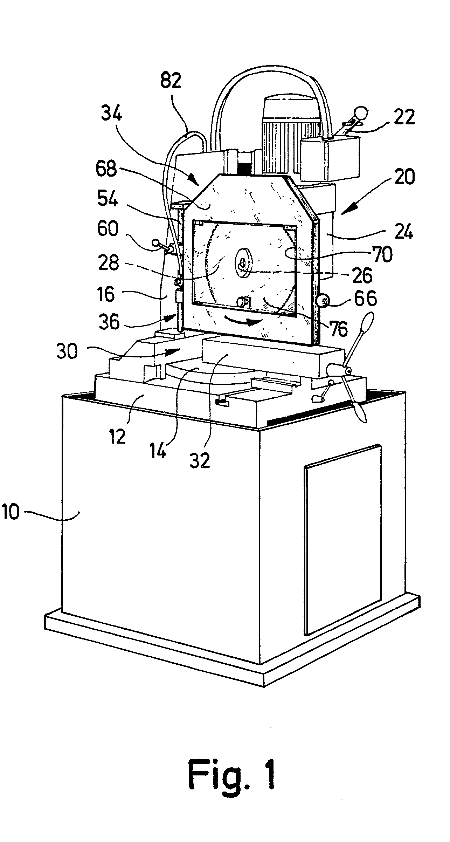

Fig. 1 zeigt eine an sich bekannte Kaltkreissägemaschine zur Durchführung von Parallelschnitten, Längsschnitten und Gehrungsschnitten. Sie ist mit einem kastenartigen Gestellunterbau 10 ausgestattet, dessen Oberseite einen Tischaufsatz 12 trägt, der die Basis des Maschinengestells der Kreissägemaschine bildet. 14 bezeichnet eine in der Mitte des Tischaufsatzes 12 verdrehbar und feststellbar gelagerte Schwenkplatte, auf der ein Maschinenständer 16 befestigt ist. Auf diesem ist vertikal verschiebbar ein als Ganzes mit 20 bezeichnetes Sägeaggregat angeordnet, das mittels eines Handhebels 22 in beiden Richtungen verstellbar ist. Das Sägeaggregat weist eine in deren Getriebegehäuse 24 horizontal gelagerte Sägewelle 26 auf, auf der ein Kreissägeblatt 28 befestigbar ist. 30 bezeichnet als Ganzes eine Werkstückspannvorrichtung, mit deren manuell verstellbaren Spannbacke 32 zu durchtrennende Metallprofile auf der Schwenkplatte 14 festspannbar sind.

Die Komponenten der Werkstückspannvorrichtung 30 sind auf dem Tischaufsatz 12 angeordnet, so dass die Schwenkplatte 14 zur Einstellung des Kreissägeblattes 28 für die Durchführung von Parallel-, Längs- oder Gehrungsschnitten relativ zu dieser Vorrichtung verdrehbar ist.

Im Gestellunterbau 10 kann wenigstens ein Pumpaggregat installiert sein, mit dessen Hilfe entweder Druckmedium zur Durchführung eines automatischen Arbeitsvorschubes und/oder Kühl- und/oder Schmierflüssigkeit dem Kreissägeblatt zuführbar ist.

Wie aus Fig. 1 zu ersehen ist, befindet sich das Kreissägeblatt 28 vollkommen eingekapselt innerhalb eines relativ schmalen kastenartigen Gehäuses 34 einer Schutzvorrichtung für das Kreissägeblatt. Dieses Gehäuse ist vom Sägeaggregat 20 getrennt am Maschinenständer 16 mittels einer als Ganzes mit 36 bezeichneten Befestigungsvorrichtung gehalten.

Das Gehäuse ist bis auf seine untere offene Längskante völlig geschlossen ausgebildet.

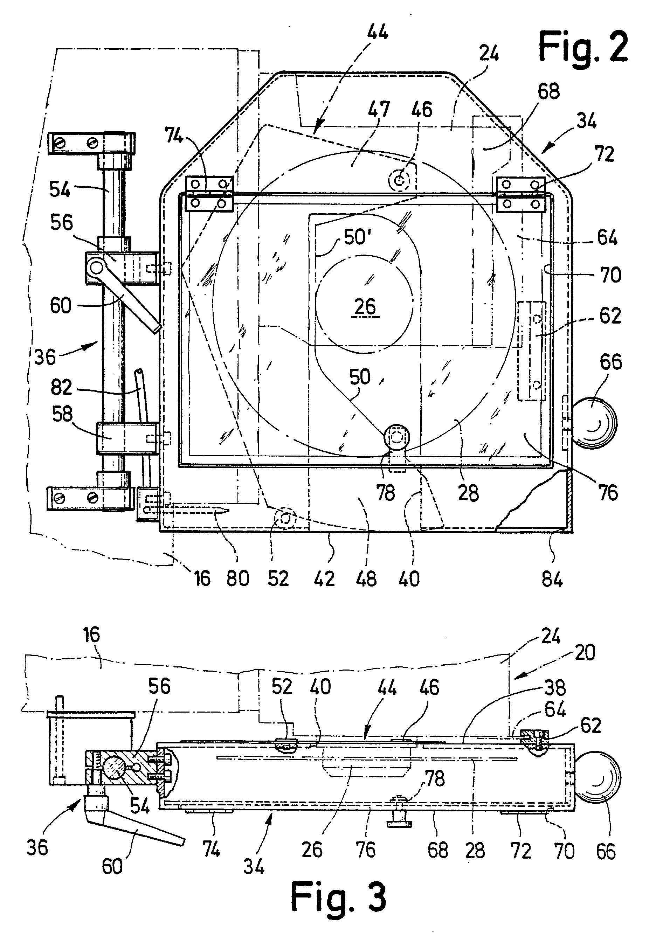

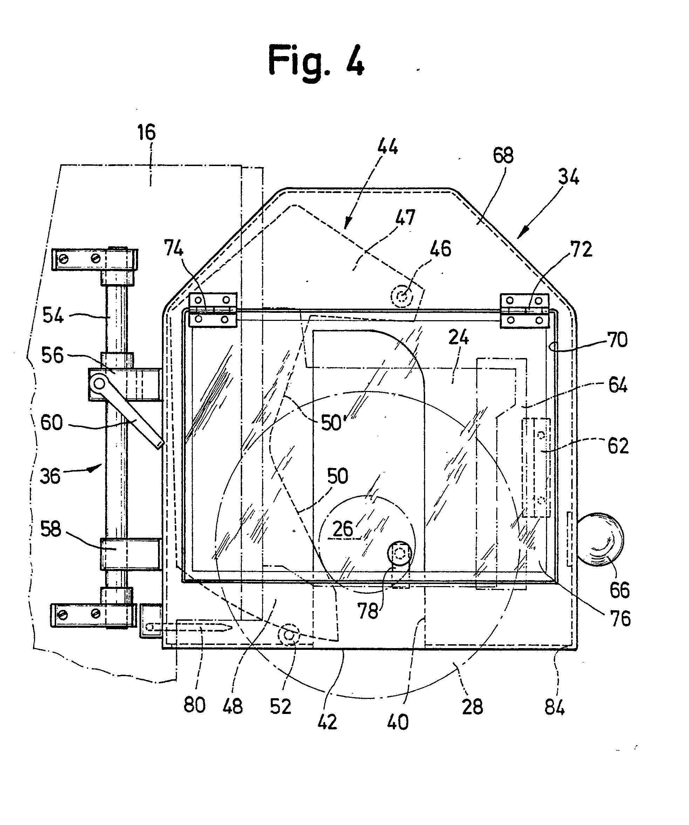

Im folgenden wird nun anhand der Fig. 2-6 dessen Konstruktion im einzelnen erläutert.

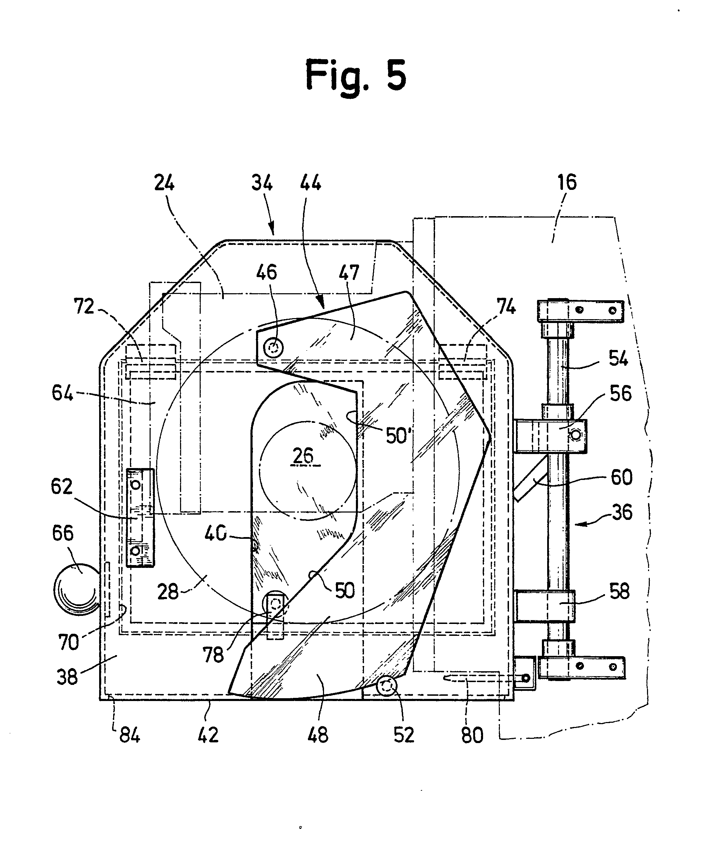

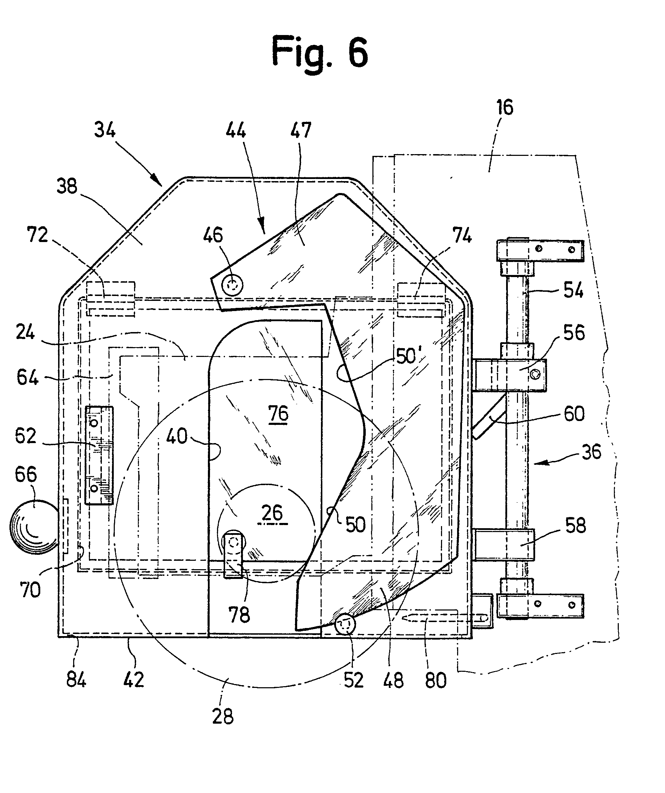

Wie aus den Fig. 5 und 6 ersichtlich ist, weist die dem Sägeaggregat 20 benachbarte Gehäuseseitenwand 38 eine längliche schlitzartige Ausnehmung 40 auf, die sich im mittleren Teil der Gehäuseseitenwand, ausgehend von deren oberen Hälfte, nach unten erstreckt und vom unteren Gehäuserand 42 aus zugänglich ist. Durch diese Ausnehmung erstreckt sich die Sägewelle 26 in das Gehäuseinnere hindurch und kann sich bei der Durchführung eines Arbeitsvorschubes bzw. bei der Rückführung des Sägeaggregates in seine obere Ausgangsstellung entlang dieser Ausnehmung 40 bewegen.

44 bezeichnet als Ganzes ein an der Gehäuseseitenwand 38 angeordnetes Abdeckglied, das als einarmiger Schwenkhebel ausgebildet ist. Die Schwenkachse dieses Schwenkhebels ist mit 46 bezeichnet und oberhalb der länglichen Ausnehmung 40 vorgesehen. Die Gestaltung des durch eine entsprechend geformte Platine hergestellten Abdeckgliedes, die Lage der Schwenkachse 46 und die Lage des Schwerpunktes der Platine bzw. des Abdeckgliedes sind so aufeinander abgestimmt, dass das sich in einer vertikalen Ebene befindende Abdeckglied sich unter der Wirkung der Schwerkraft selbsttätig in seine in Fig. 5 gezeigte Abdeckstellung bewegt, in der es die längliche Ausnehmung 40 zumindest in deren unterem Bereich abdeckt. Hierzu ist Voraussetzung, dass sich die Sägewelle 26 in ihrer in Fig. 5 gezeigten oberen Ausgangsstellung im Gehäuse befindet, so dass für das freie pendelfähige, die Ausnehmung 40 abdeckende Endstück 48 des Abdeckgliedes die Möglichkeit besteht, in seine Abdeckstellung, gemäss Fig. 5, einschwenken zu können. Beim vorliegenden Ausführungsbeispiel ist die Form des Abdeckgliedes in etwa vergleichbar mit der eines Bumerangs, dessen eines Endstück 47 an der gehäusefesten Schwenkachse 46 gelagert ist, und dessen anderes Endstück 48 mit seiner Innenkante eine geradlinige, zur Bewegungsebene der Sägewelle schräg verlaufende Auflaufkurve 50 bildet. Mit 52 ist ein gehäusefestes Führungsglied bezeichnet, welches das freie Endstück 48 des Abdeckgliedes während seiner Verschwenkung führt.

Sofern das Sägeaggragat 20 beispielsweise mittels des Handhebels 22 zur Durchführung eines Sägevorschubes nach unten bewegt und damit relativ zum Gehäuse 34 verstellt wird, verlagert sich die Sägewelle 26 in der länglichen Ausnehmung 40 der Gehäuseseitenwand 38 nach unten. Solange sie sich hierbei entlang eines benachbarten geraden Kantenteilstückes 50' des Abdeckgliedes 44 bewegt, das zu deren Bewegungsebene parallel verläuft, behält das Abdeckglied seine in Fig. 5 gezeigte Abdeckstellung bei, so dass insbesondere der Umfangsbereich des Kreissägeblattes 28 abdeckt bleibt und damit ein wirksamer Berührungsschutz seiner Sägezähne gegeben ist. Ab einer bestimmten Vorschubposition läuft dann die Sägewelle auf die Auflaufkurve 50 auf, wodurch das Abdeckglied, gemäss Fig. 6 in Gegenuhrzeigerrichtung verschwenkt und dadurch der Weg für die weitere Absenkbewegung der Sägewelle 26 freigemacht wird. Bewegt sich das Sägeaggregat nach Erreichen der Vorschubendstellung in seine Ausgangsstellung zurück, bewegt sich das Abdeckglied 44, wie vorstehend bereits erläutert, selbsttätig wieder in seine Abdeckstellung zurück.

Aus Fig. 3 ist hierbei ersichtlich, dass das Gehäuse 34 in einem geringen Parallelabstand zum Sägeaggregat 20 angeordnet und demgemäss das an der Aussenseite der Gehäuseseitenwand 38 angelekte Abdeckglied 44 zwischen Gehäuse und Sägeaggregat schwenkbeweglich ist.

Die zur Montage des Gehäuses 34 dienende Befestigungsvorrichtung 36 weist eine seitlich am Maschinenständer 16 vertikal angeordnete Haltestange 54 auf, auf welcher das Gehäuse mittels zweier Führungs- und Haltekörper 56, 58 axial verstellbar und feststellbar angeordnet ist, wozu der obere Haltekörper 56 eine z.B. mittels eines Kipphebels 60 spannbare Spannpratze bildet. Um das Gehäuse 34 in einer zum Sägeaggregat im wesentlichen parallelen Ebene zu stabilisieren, ist an dessen Gehäuseseitenwand 38 ein Führungskörper 62 befestigt, der eine Längsnut besitzt, in die ein am Sägeaggregat befestigtes Führungsblech 64 eingreift. Mit 66 ist ein vorzugsweise kugelförmiger Handgriff bezeichnet, der an der vorderen schmalen Gehäuselängswand in deren unterem Bereich vorgesehen ist und als Handhabe dazu dient, bei gelöster Spannpratze 56 das Gehäuse in der Höhe stufenlos verstellen zu können.

In der vorderen Gehäuseseitenwand 68 ist eine insbesondere rechteckförmige Wandöffnung 70 angeordnet, die mittels einer an Scharnieren 72, 74 gehaltenen Verschlussklappe 76 verschliessbar und mittels eines Verschlussgliedes 78 in ihrer Schliessstellung arretierbar ist. Diese Verschlussklappe ermöglicht einen Zugang zum freien Ende der Sägewelle zur Montage und Demontage von Kreissägeblättern.

Mit 80 ist eine innerhalb des Gehäuses in dessen unterem Bereich stationär angeordnete Sprühvorrichtung bezeichnet, der über einen Zuführschlauch 82 Kühl-und/oder Schmierflüssigkeit zugeführt und mit deren Hilfe ein- oder beidseitig das Kreissägeblatt besprüht werden kann.

Diese Flüssigkeit kann, ebenso wie das Kreissägeblatt, aus der unteren Gehäuseöffnung 84 (Fig. 2) austreten. Wie Fig. 1 zeigt, wird man vorteilhaft das Gehäuse 34 der Schutzvorrichtung stets so positionieren, dass dasselbe mit seinem unteren Gehäuserand 42 entweder auf der Spannvorrichtung 30 oder auf einem zu durchtrennenden Metallprofil aufsitzt bzw. sich in minimalem Abstand über diesen Teilen befindet.

Das Abdeckglied 44 ist derart ausgebildet, dass es, wie aus Fig. 6 ersichtlich ist, die längliche Ausnehmung 40 in der hinteren Gehäusewand 38 erst dann zum überwiegenden Teil freigibt, wenn das Kreissägeblatt bereits in das betreffende Werkstück eingetaucht ist, so dass gewährleistet ist, dass in jeder Bewegungsphase des Kreissägeblattes in Vorschubrichtung dieses zumindest im Umfangsbereich bzw. dessen Sägezähne so lange abdeckt sind, solange sie nicht in das Werkstück eindringen.

## Patentansprüche

1. Schutzvorrichtung für das Kreissägeblatt (28) von Kreissägemaschinen, deren eine horizontal gelagerte Sägewelle (26) aufweisendes Sägeaggregat (20) am Maschinengestell (10, 16) vertikal beweglich angeordnet ist, die das Kreissägeblatt von oben her und mindestens teilweise dessen zugängliche Stirnfläche und dessen an der Bedienungsseite vorhandenen Umfangsteil abdeckt, dadurch gekennzeichnet, dass die Schutzvorrichtung ein am Maschinengestell (16) relativ zum Kreissägeblatt (28) feststehend anbringbares, lediglich unten offenes, das Kreissägeblatt in seiner Ausgangsstellung völlig aufnehmendes Gehäuse (34) bildet, in dessen dem Sägeaggregat (20) benachbarter Gehäuseseitenwand (38) zur Aufnahme der Sägewelle (26) eine sich von oben nach unten erstreckende längliche Ausnehmung (40) angeordnet ist und dass dieser Ausnehmung ein Abdeckglied (44) zugeordnet ist, das aus einer Abdeckstellung, in der es in der oberen Ausgangsstellung des Kreissägeblattes (28) den unterhalb der Sägewelle (26) vorhandenen Teil der Ausnehmung (40) zumindest im Umfangsbereich des Kreissägeblattes (28) abdeckt, bei Durchführung der Vorschubbewegung des Kreissägeblattes in eine diesen Teil der Ausnehmung (40) sukzessive freigebende Freigabestellung steuerbar ist.

2. Schutzvorrichtung nach Anspruch 1, dadurch gekennzeichnet, dass die die Sägewelle (26) aufnehmende Gehäuseausnehmung (40) am unteren Rand (42) der betreffenden Gehäuseseitenwand (38) aus dieser austritt.

3. Schutzvorrichtung nach Anspruch 1 oder 2, dadurch gekennzeichnet, dass das Abdeckglied (44) durch Verschwenken um eine zur Sägewelle parallele Achse (46) zwischen seiner Abdeck- und Freigabestellung hin- und herverschwenkbar ist.

4. Schutzvorrichtung nach Anspruch 3, dadurch gekennzeichnet, dass das Abdeckglied (44) in Art eines einarmigen Schwenkhebels ausgebildet ist, dessen Schwenkachse (46) oberhalb der Sägewelle (26) derart positioniert ist, dass das Abdeckglied (44) selbsttätig in seine Abdeckstellung einschwenkt.

5. Schutzvorrichtung nach Anspruch 3 oder 4, dadurch gekennzeichnet, dass die Sägewelle (26) ein Verstellglied zur Verstellung des Abdeckgliedes (44) bildet und dieses bei der Bewegung der Sägewelle in Vorschubrichtung aus seiner Abdeckstellung in seine Freigabestellung auslenkt.

6. Schutzvorrichtung nach einem der vorhergehenden Ansprüche, dadurch gekennzeichnet, dass das Abdeckglied (44) an der die Gehäuseausnehmung (40) für die Sägewelle (26) aufweisenden Gehäuseseitenwand (38), insbesondere an deren Aussenseite, angeordnet ist.

7. Schutzvorrichtung nach einem der vorhergehenden Ansprüche, dadurch gekennzeichnet, dass in der frei zugänglichen Gehäuseseitenwand (68) eine mittels einer insbesondere durchsichtigen Verschlussklappe (76) verschliessbare Wandöffnung (70) zum Auswechseln des Kreissägeblattes (26) vorgesehen ist.

8. Schutzvorrichtung nach einem der vorhergehenden Ansprüche, dadurch gekennzeichnet, dass das Gehäuse (34) am Maschinengestell (16) in der Höhe stufenlos verstellbar und feststellbar angeordnet ist.

9. Schutzvorrichtung nach einem der vorhergehenden Ansprüche, dadurch gekennzeichnet, dass innerhalb des Gehäuses (34) eine Sprühvorrichtung (80) zum Ansprühen des Kreissägeblattes (26) mit Kühl- und/oder Schmierflüssigkeit angeordnet ist.

**Claims**

1. A protective device for the circular saw blade (28) of circular sawing machines, whose sawing unit (20), which comprises a horizontally mounted saw shaft (26), is disposed on the machine frame (10, 16) so as to be vertically displaceable, and which protective device covers the circular saw blade from above, at least partially covers the accessible front surface thereof and covers the peripheral section thereof at the operating side, characterized in that the protective device forms a housing (34) which may be mounted on the machine frame (16) so that it is stationary with respect to the circular saw blade (28), is only open at the bottom, completely receives the circular saw blade in its starting position and in whose lateral housing wall (38) adjacent the sawing unit (20) there is disposed an elongated recess (40), which extends from the top to the bottom, for receiving the saw shaft (26); and in that there is associated with this recess a covering member (44) which may be directed from a covering position, in which, in the upper starting position of the circular saw blade (28), it covers the part of the recess (40) which is below the saw shaft (26) at least in the peripheral area of the circular saw blade (28), into a releasing position which successively releases this part of the recess (40) when the advance movement of the circular saw blade is performed.

2. A protective device as claimed in claim 1, characterized in that the housing recess (40) receiving the saw shaft (26) emerges from the relevant lateral housing wall (38) at the lower edge (42) thereof.

3. A protective device as claimed in claim 1 or 2, characterized in that the covering member (44) may be pivoted in a reciprocating manner between its covering and releasing positions by pivoting about an axle (46) which is parallel to the saw shaft.

4. A protective device as claimed in claim 3, characterized in that the covering member (44) is formed in the manner of a one-armed swivelling lever whose axis of pivot (46) is positioned above the saw shaft (26) in such a manner that the covering member (44) automatically pivots into its covering position.

5. A protective device as claimed in claim 3 or 4, characterized in that the saw shaft (26) forms a displacement member for displacing the covering member (44) and deflects the latter form its covering position into its releasing position when the saw shaft moves in the feed direction.

6. A protective device as claimed in any of the preceding claims, characterized in that the covering member (44) is disposed at the lateral housing wall (38) comprising the housing recess (40) for the saw shaft (26), in particular at the outer side of the lateral housing wall (38).

7. A protective device as claimed in any of the preceding claims, characterized in that there is provided in the freely accessible lateral housing wall (68) a wall opening (70) for interchanging the circular saw blade (26), which opening (70) may be closed by means of a closing cover (76), in particular a transparent closing cover.

8. A protective device as claimed in any of the preceding claims, characterized in that the housing (34) is arranged on the machine frame (16) so that it may be vertically continuously adjusted and fixed.

9. Protective device as claimed in any of the preceding claims, characterized in that a spraying device (80) is disposed inside the housing (34) for spraying the circular saw blade (26) with cooling and/or lubricating fluid.

**Revendications**

1. Dispositif de protection pour la lame circulaire (28) de machines à scie circulaire dans lesquelles un appareil de sciage (20) comportant un arbre de scie (26) monté horizontalement est mobile verticalement sur un bâti (10, 16) de la machine, dispositif qui recouvre la lame circulaire par le haut et qui en recouvre au moins partiellement la face accessible ainsi que la partie de la périphérie se trouvant du côté du travail caractérisé en ce que le dispositif de protection forme un boîtier (34) qui peut être installé en position fixe sur le bâti (16) de la machine par rapport à la lame circulaire (28), qui est ouvert uniquement vers le bas, dans lequel la lame circulaire est entièrement logée dans sa position de départ et qui présente dans sa paroi (38) voisine de l'appareil de sciage (20) un évidement (40) de forme allongée destiné à recevoir l'arbre de scie (26) et s'étendant de haut en bas, et en ce qu'à cet évidement est associé un organe de recouvrement (44) qui peut être actionné pour passer d'une position de recouvrement, dans laquelle il recouvre la partie de l'évidement (40) située au-dessous de l'arbre de scie (26), au moins dans la région périphérique de la lame circulaire (28), dans la position supérieure de départ de la lame circulaire (28), à une position de libération récouvrant progressivement cette partie de l'évidement (40) lorsque s'effectue le mouvement d'avance de la lame circulaire.

2. Dispositif de protection suivant la revendication 1, caractérisé en ce que l'évidement (40) du boîtier qui reçoit l'arbre de scie (26) débouche sur le bord inférieur (42) de la paroi latérale correspondante (38) du boîtier.

3. Dispositif de protection suivant l'une des revendications 1 et 2, caractérisé en ce que l'organe de recouvrement (44) peut osciller dans les deux sens entre sa position de recouvrement et sa position de libération par basculement autour d'un axe (46) parallèle à l'arbre de scie.

4. Dispositif de protection suivant la revendication 3, caractérisé en ce que l'organe de recouvrement (44) est réalisé sous la forme d'un levier oscillant à un seul bras dont l'axe d'oscillation (46) est positionné au-dessus de l'arbre de scie (26) de telle manière que l'organe de recouvrement (44) vient automatiquement par basculement dans sa position de recouvrement.

5. Dispositifs de protection suivant l'une des revendications 3 e 4, caractérisé en ce que l'arbre de scie (26) forme un élément de déplacement servant à déplacer l'organe de recouvrement (44) et repousse cet organe de sa position de recouvrement à sa position de libération lors du mouvement de l'arbre de scie dans le sens de l'avance.

6. Dispositif de protection suivant l'une des revendications précédentes, caractérisé en ce que l'organe de recouvrement (44) est disposé sur la paroi latérale (38) du boîtier qui comporte l'évidement (40) destiné à l'arbre de scie (26), en particulier sur le côté extérieur de cette paroi.

7. Dispositif de protection suivant l'une des revendications précédentes, caractérisé en ce qu'une ouverture (70) pouvant être obturée par un couvercle (76) en particulier transparent est prévue dans la paroi latérale (68) du boîtier librement accessible en vue de changer la lame circulaire (26).

8. Dispositif de protection suivant l'une des revendications précédentes, caractérisé en ce que le boîtier (34) peut être déplacé verticalement et fixé en position de façon continue sur le bâti (16) de la machine.

9. Dispositif de protection suivant l'une des revendications précédentes, caractérisé en ce qu'un dispositif de pulvérisation (80) destiné à pulvériser sur la lame circulaire (26) un liquide de refroidissement et/ou de lubrification est disposé à l'intérieur du boîtier (34).

**Fig. 1**

Fig. 2

Fig. 3

# Fig. 4

# Fig. 5

# Fig. 6